# EUROPEAN PATENT SPECIFICATION

(11) **EP 3 903 544 B1**
(45) Date of publication and mention of the grant of the patent: **04.12.2024**
(21) Application number: 20701146.1
(22) Date of filing: 10.01.2020
(51) Int. Cl.: H04W 76/28, H04W 52/02

(54) **COMMUNICATIONS DEVICES, INFRASTRUCTURE EQUIPMENT, CIRCUITRIES AND METHODS**
KOMMUNIKATIONSVORRICHTUNGEN, INFRASTRUKTURAUSRÜSTUNG, SCHALTUNGEN UND VERFAHREN
DISPOSITIFS DE COMMUNICATION, ÉQUIPEMENT D'INFRASTRUCTURE, CIRCUITS ET PROCÉDÉS

(30) Priority: 11.01.2019 EP 19151357
(43) Date of publication of application: 03.11.2021
(73) Proprietor: Sony Group Corporation, 108-0075 Tokyo (JP); Sony Europe B.V., Weybridge, Surrey KT13 0XW (GB)
(72) Inventor: WONG, Shin Horng, Basingstoke, Hampshire RG22 4SB (GB); BEALE, Martin Warwick, Basingstoke, Hampshire RG22 4SB (GB)
(74) Representative: D Young & Co LLP
(86) International application number: PCT/EP2020/050585
(87) International publication number: WO 2020/144354

(56) References cited:
- WO-A1-2017/100090
- QUALCOMM INCORPORATED: "UE Adaptation to the Traffic and UE Power Consumption Characteristics", vol. RAN WG1, no. Spokane, Washington, USA; 20181112 - 20181116, 11 November 2018 (2018-11-11), XP051555486, Retrieved from the Internet <URL:http://www.3gpp.org/ftp/Meetings%5F3GPP%5FSYNC/RAN1/Docs/R1%2D1813447%2Ezip> [retrieved on 20181111]
- SONY: "Triggering UE adaptation using a PDCCH-based power saving channel", vol. RAN WG1, no. Xi'an, China; 20190408 - 20190412, 2 April 2019 (2019-04-02), XP051707542, Retrieved from the Internet <URL:http://www.3gpp.org/ftp/tsg%5Fran/WG1%5FRL1/TSGR1%5F96b/Docs/R1%2D1905474%2Ezip> [retrieved on 20190402]
- SONY: "Power saving techniques for NR", vol. RAN WG1, no. Athens, Greece; 20190225 - 20190301, 16 February 2019 (2019-02-16), XP051599881, Retrieved from the Internet <URL:http://www.3gpp.org/ftp/tsg%5Fran/WG1%5FRL1/TSGR1%5F96/Docs/R1%2D1902186%2Ezip> [retrieved on 20190216]
- SONY: "Power Consumption Triggering for NR", vol. RAN WG1, no. Taipei, Taiwan; 20190121 - 20190125, 20 January 2019 (2019-01-20), XP051593295, Retrieved from the Internet <URL:http://www.3gpp.org/ftp/Meetings%5F3GPP%5FSYNC/RAN1/Docs/R1%2D1900381%2Ezip> [retrieved on 20190120]
- HOLMA H.TOSKALA A: "LTE for UMTS OFDMA and SC-FDMA based radio access", 2009, JOHN WILEY AND SONS
- QUALCOMM INCORPORATED: "UE Adaptation to the Traffic and UE Power Consumption Characteristics", vol. RAN WG1, no. Spokane, Washington, USA; 20181112 - 20181116, 11 November 2018 (2018-11-11), XP051555486, Retrieved from the Internet <URL:http://www.3gpp.org/ftp/Meetings%5F3GPP%5FSYNC/RAN1/Docs/R1%2D1813447%2Ezip> [retrieved on 20181111]
- "3rd Generation Partnership Project; Technical Specification Group Radio Access Network; NR; Study on UE Power Saving (Release 16)", 3GPP STANDARD; TECHNICAL REPORT; 3GPP TR 38.840, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.1.0, 29 November 2018 (2018-11-29), pages 1 - 24, XP051590958
- INTERDIGITAL ET AL: "Discussion on Triggering of Power Mode Adaptation", vol. RAN WG1, no. Spokane, USA; 20181112 - 20181116, 11 November 2018 (2018-11-11), XP051555247, Retrieved from the Internet <URL:http://www.3gpp.org/ftp/Meetings%5F3GPP%5FSYNC/RAN1/Docs/R1%2D1813244%2Ezip> [retrieved on 20181111]
- INTERDIGITAL INC: "DRX in NR-U", vol. RAN WG2, no. Chengdu, China; 20181008 - 20181012, 28 September 2018 (2018-09-28), XP051523484, Retrieved from the Internet <URL:http://www.3gpp.org/ftp/tsg%5Fran/WG2%5FRL2/TSGR2%5F103bis/Docs/R2%2D1814022%2Ezip> [retrieved on 20180928]
- HUAWEI ET AL: "Design considerations for UE power saving", vol. RAN WG1, no. Busan, Korea; 20180521 - 20180525, 20 May 2018 (2018-05-20), XP051442501, Retrieved from the Internet <URL:http://www.3gpp.org/ftp/Meetings%5F3GPP%5FSYNC/RAN1/Docs/> [retrieved on 20180520]

## Description

### BACKGROUND

### Field of Disclosure

The present disclosure relates generally to communications devices, infrastructure equipment, circuitries and methods of operating communications devices and infrastructure equipment and specifically to communications devices configured operate in accordance with a discontinuous reception (DRX) operation.

### Description of Related Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Third and fourth generation mobile telecommunication systems, such as those based on the 3GPP defined UMTS and Long Term Evolution (LTE) architecture, are able to support more sophisticated services than simple voice and messaging services offered by previous generations of mobile telecommunication systems. For example, with the improved radio interface and enhanced data rates provided by LTE systems, a user is able to enjoy high data rate applications such as mobile video streaming and mobile video conferencing that would previously only have been available via a fixed line data connection. The demand to deploy such networks is therefore strong and the coverage area of these networks, i.e. geographic locations where access to the networks is possible, may be expected to increase ever more rapidly.

Future wireless communications networks will be expected to routinely and efficiently support communications with a wider range of devices associated with a wider range of data traffic profiles and types than current systems are optimised to support. For example it is expected future wireless communications networks will be expected to efficiently support communications with devices including reduced complexity devices, machine type communication (MTC) devices, high resolution video displays, virtual reality headsets and so on. Some of these different types of devices may be deployed in very large numbers, for example low complexity devices for supporting the "The Internet of Things", and may typically be associated with the transmissions of relatively small amounts of data with relatively high latency tolerance.

In view of this there is expected to be a desire for future wireless communications networks, for example those which may be referred to as 5G or new radio (NR) system / new radio access technology (RAT) systems, as well as future iterations / releases of existing systems, to efficiently support connectivity for a wide range of devices associated with different applications and different characteristic data traffic profiles.

The increasing use of different types of network infrastructure equipment and terminal devices associated with different traffic profiles give rise to new challenges for efficiently handling communications in wireless communications systems that need to be addressed.

WO 2017/100090 A1 relates generally to wireless communication, and more specifically to macro and micro discontinuous reception (DRX).

Non-patent document "UE Adaptation to the Traffic and UE Power Consumption Characteristics" (Qualcomm Incorporated) discusses various aspects relating to techniques for UE power saving in RRC_CONNECTED mode, including the UE's adaptation to the traffic and UE power consumption characteristics in frequency, time, antenna domains, DRX configuration, and UE processing timelines for UE power saving.

Non-patent document "3rd Generation Partnership Project; Technical Specification Group Radio Access Network; NR; Study on UE Power Saving (Release 16)" (3GPP, TR 38.840) is directed to the study of the UE power saving framework, taking into consideration latency and performance in NR as well as network impacts.

### SUMMARY OF THE DISCLOSURE

The present disclosure can help address or mitigate at least some of the issues discussed above. The invention is defined by the appended claims.

Embodiments of the present technique, which further relate to infrastructure equipment, methods of operating communications devices and infrastructure equipment, and circuitry for communications devices and infrastructure equipment, allow for the signalling and control of the ON duration of a communications device's DRX operation, thereby improving power saving at the communications device. Respective aspects and features of the present disclosure are defined in the appended claims.

It is to be understood that both the foregoing general description and the following detailed description are exemplary, but are not restrictive, of the present technology. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and wherein:
Figure 1 schematically represents some aspects of an LTE-type wireless telecommunication system which may be configured to operate in accordance with certain embodiments of the present disclosure;
Figure 2 schematically represents some aspects of a new radio access technology (RAT) wireless telecommunications system which may be configured to operate in accordance with certain embodiments of the present disclosure;
Figure 3 shows an example of a DRX cycle;
Figure 4 shows a part schematic, part message flow diagram representation of a wireless communications network comprising a communications device and an infrastructure equipment in accordance with embodiments of the present technique;
Figure 5 illustrates an example of how a default DRX ON period may be updated in accordance with embodiments of the present technique;
Figure 6 illustrates an example of how an offset period may be configured resulting in a new active DRX period being outside of the default DRX ON period in accordance with embodiments of the present technique;
Figure 7 shows an example of different UEs being configured with different offset period settings in accordance with embodiments of the present technique;
Figure 8 shows an example of sub-DRX cycles in accordance with embodiments of the present technique;
Figure 9 illustrates a first example of DDIs acting as keep alive signals within a DRX ON period in accordance with embodiments of the present technique;
Figure 10 illustrates a second example of DDIs acting as keep alive signals indicating whether the current sub-DRX period is active or not in accordance with embodiments of the present technique;
Figure 11 shows an example of two distinct active states within a DRX ON duration in accordance with embodiments of the present technique;
Figure 12 shows an example of how a DDI may be carried by a compact DCI that is transmitted within the DRX ON duration in accordance with embodiments of the present technique;
Figure 13 illustrates how a first active state may act as a DDI for a second active state in accordance with embodiments of the present technique; and
Figure 14 is a flow diagram representation of a method of operating a communications device according to embodiments of the present technique.

### DETAILED DESCRIPTION OF THE EMBODIMENTS

### Long Term Evolution Advanced Radio Access Technology (4G)

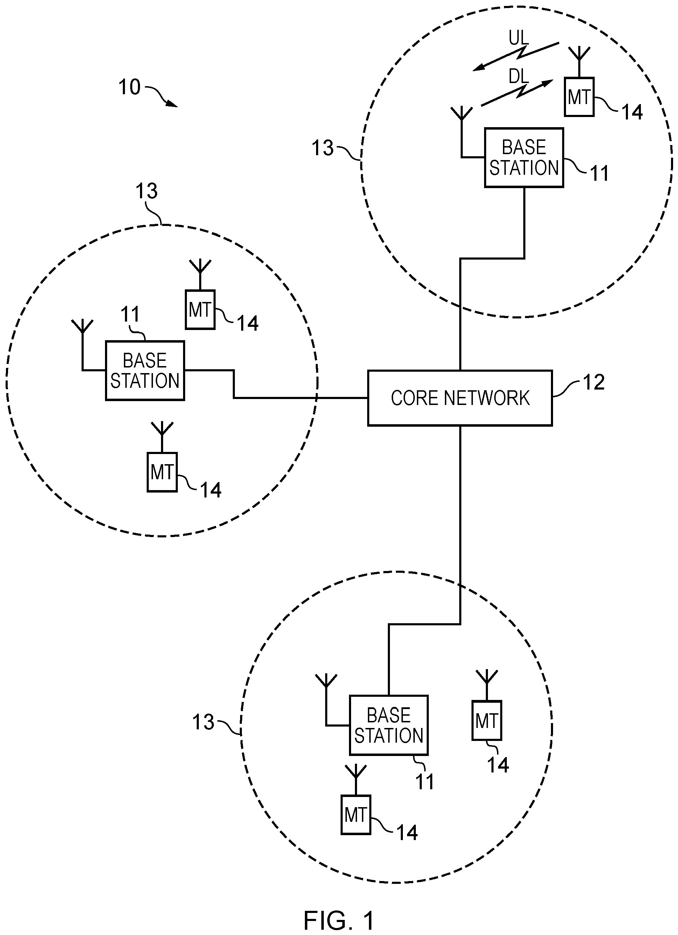

Figure 1 provides a schematic diagram illustrating some basic functionality of a mobile telecommunications network / system 10 operating generally in accordance with LTE principles, but which may also support other radio access technologies, and which may be adapted to implement embodiments of the disclosure as described herein. Various elements of Figure 1 and certain aspects of their respective modes of operation are well-known and defined in the relevant standards administered by the 3GPP (RTM) body, and also described in many books on the subject, for example, Holma H. and Toskala A [1]. It will be appreciated that operational aspects of the telecommunications (or simply, communications) networks discussed herein which are not specifically described (for example in relation to specific communication protocols and physical channels for communicating between different elements) may be implemented in accordance with any known techniques, for example according to the relevant standards and known proposed modifications and additions to the relevant standards.

The network 10 includes a plurality of base stations 11 connected to a core network 12. Each base station provides a coverage area 13 (i.e. a cell) within which data can be communicated to and from terminal devices 14. Data is transmitted from base stations 11 to terminal devices 14 within their respective coverage areas 13 via a radio downlink (DL). Data is transmitted from terminal devices 14 to the base stations 11 via a radio uplink (UL). The core network 12 routes data to and from the terminal devices 14 via the respective base stations 11 and provides functions such as authentication, mobility management, charging and so on. Terminal devices may also be referred to as mobile stations, user equipment (UE), user terminal, mobile radio, communications device, and so forth. Base stations, which are an example of network infrastructure equipment / network access node, may also be referred to as transceiver stations / nodeBs / e-nodeBs / eNBs / g-nodeBs / gNBs and so forth. In this regard different terminology is often associated with different generations of wireless telecommunications systems for elements providing broadly comparable functionality. However, certain embodiments of the disclosure may be equally implemented in different generations of wireless telecommunications systems, and for simplicity certain terminology may be used regardless of the underlying network architecture. That is to say, the use of a specific term in relation to certain example implementations is not intended to indicate these implementations are limited to a certain generation of network that may be most associated with that particular terminology.

### New Radio Access Technology (5G)

As mentioned above, the embodiments of the present disclosure can also find application with advanced wireless communications systems such as those referred to as 5G or New Radio (NR) Access Technology. The use cases that are considered for NR include:
- Enhanced Mobile Broadband (eMBB)
- Massive Machine Type Communications (mMTC)
- Ultra Reliable & Low Latency Communications (URLLC) [2]
eMBB services are characterised by high capacity with a requirement to support up to 20 Gb/s. The requirement for URLLC is a reliability of 1 - 10⁻⁵ (99.999 %) for one transmission of a relatively short packet such as 32 bytes with a user plane latency of 1 ms.

The elements of the wireless access network shown in Figure 1 may be equally applied to a 5G new RAT configuration, except that a change in terminology may be applied as mentioned above.

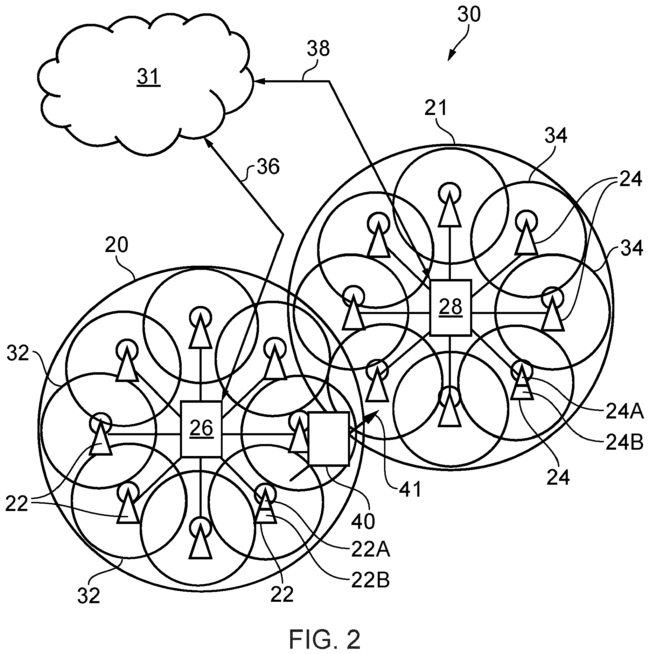

Figure 2 is a schematic diagram illustrating a network architecture for a new RAT wireless mobile telecommunications network / system 30 based on previously proposed approaches which may also be adapted to provide functionality in accordance with embodiments of the disclosure described herein. The new RAT network 30 represented in Figure 2 comprises a first communication cell 20 and a second communication cell 21. Each communication cell 20, 21, comprises a controlling node (centralised unit, CU) 26, 28 in communication with a core network component 31 over a respective wired or wireless link 36, 38. The respective controlling nodes 26, 28 are also each in communication with a plurality of distributed units (radio access nodes / remote transmission and reception points (TRPs)) 22, 24 in their respective cells. Again, these communications may be over respective wired or wireless links. The distributed units (DUs) 22, 24 are responsible for providing the radio access interface for terminal devices connected to the network. Each distributed unit 22, 24 has a coverage area (radio access footprint) 32, 34 which together define the coverage of the respective communication cells 20, 21. Each distributed unit 22, 24 includes transceiver circuitry 22a, 24a for transmission and reception of wireless signals and processor circuitry 22b, 24b configured to control the respective distributed units 22, 24.

In terms of broad top-level functionality, the core network component 31 of the new RAT telecommunications system represented in Figure 2 may be broadly considered to correspond with the core network 12 represented in Figure 1, and the respective controlling nodes 26, 28 and their associated distributed units / TRPs 22, 24 may be broadly considered to provide functionality corresponding to base stations of Figure 1. The term network infrastructure equipment / access node may be used to encompass these elements and more conventional base station type elements of wireless telecommunications systems. Depending on the application at hand the responsibility for scheduling transmissions which are scheduled on the radio interface between the respective distributed units and the terminal devices may lie with the controlling node / centralised unit and / or the distributed units / TRPs.

A terminal device 40 is represented in Figure 2 within the coverage area of the first communication cell 20. This terminal device 40 may thus exchange signalling with the first controlling node 26 in the first communication cell via one of the distributed units 22 associated with the first communication cell 20. In some cases communications for a given terminal device are routed through only one of the distributed units, but it will be appreciated in some other implementations communications associated with a given terminal device may be routed through more than one distributed unit, for example in a soft handover scenario and other scenarios.

The particular distributed unit(s) through which a terminal device is currently connected through to the associated controlling node may be referred to as active distributed units for the terminal device. Thus the active subset of distributed units for a terminal device may comprise one or more than one distributed unit (DU/TRP). The controlling node 26 is responsible for determining which of the distributed units 22 spanning the first communication cell 20 is responsible for radio communications with the terminal device 40 at any given time (i.e. which of the distributed units are currently active distributed units for the terminal device). Typically this will be based on measurements of radio channel conditions between the terminal device 40 and respective ones of the distributed units 22. In this regard, it will be appreciated the subset of the distributed units in a cell which are currently active for a terminal device will depend, at least in part, on the location of the terminal device within the cell (since this contributes significantly to the radio channel conditions that exist between the terminal device and respective ones of the distributed units).

In at least some implementations the involvement of the distributed units in routing communications from the terminal device to a controlling node (controlling unit) is transparent to the terminal device 40. That is to say, in some cases the terminal device may not be aware of which distributed unit is responsible for routing communications between the terminal device 40 and the controlling node 26 of the communication cell 20 in which the terminal device is currently operating, or even if any distributed units 22 are connected to the controlling node 26 and involved in the routing of communications at all. In such cases, as far as the terminal device is concerned, it simply transmits uplink data to the controlling node 26 and receives downlink data from the controlling node 26 and the terminal device has no awareness of the involvement of the distributed units 22, though may be aware of radio configurations transmitted by distributed units 22. However, in other embodiments, a terminal device may be aware of which distributed unit(s) are involved in its communications. Switching and scheduling of the one or more distributed units may be done at the network controlling node based on measurements by the distributed units of the terminal device uplink signal or measurements taken by the terminal device and reported to the controlling node via one or more distributed units.

In the example of Figure 2, two communication cells 20, 21 and one terminal device 40 are shown for simplicity, but it will of course be appreciated that in practice the system may comprise a larger number of communication cells (each supported by a respective controlling node and plurality of distributed units) serving a larger number of terminal devices.

It will further be appreciated that Figure 2 represents merely one example of a proposed architecture for a new RAT telecommunications system in which approaches in accordance with the principles described herein may be adopted, and the functionality disclosed herein may also be applied in respect of wireless telecommunications systems having different architectures.

Thus certain embodiments of the disclosure as discussed herein may be implemented in wireless telecommunication systems / networks according to various different architectures, such as the example architectures shown in Figures 1 and 2.

It will thus be appreciated the specific wireless telecommunications architecture in any given implementation is not of primary significance to the principles described herein. In this regard, certain embodiments of the disclosure may be described generally in the context of communications between network infrastructure equipment / access nodes and a terminal device, wherein the specific nature of the network infrastructure equipment / access node and the terminal device will depend on the network infrastructure for the implementation at hand. For example, in some scenarios the network infrastructure equipment / access node may comprise a base station, such as an LTE-type base station 11 as shown in Figure 1 which is adapted to provide functionality in accordance with the principles described herein, and in other examples the network infrastructure equipment may comprise a control unit / controlling node 26, 28 and / or a TRP 22, 24 of the kind shown in Figure 2 which is adapted to provide functionality in accordance with the principles described herein.

As is well understood, various wireless telecommunications networks, such as the LTE-based network represented in Figure 1 and the NR-based network represented in Figure 2, may support different Radio Resource Control (RRC) modes for terminal devices, typically including: (i) RRC idle mode (RRC_IDLE); and (ii) RRC connected mode (RRC_CONNECTED). When a terminal device transmits data, RRC connected mode is generally used. The RRC idle mode, on the other hand, is for terminal devices which are registered to the network (EMM-REGISTERED), but not currently in active communication (ECM-IDLE). Thus, generally speaking, in RRC connected mode a terminal device is connected to a radio network access node (e.g. an LTE base station) in the sense of being able to exchange user plane data with the radio network access node. Conversely, in RRC idle mode a terminal device is not connected to a radio network access node in the sense of not being able to communicate user plane data using the radio network access node. In idle mode the terminal device may still receive some communications from base stations, for example reference signalling for cell reselection purposes and other broadcast signalling. The RRC connection setup procedure of going from RRC idle mode to RRC connected mode may be referred to as connecting to a cell / base station.

For a terminal device in RRC idle mode the core network is aware that the terminal device is present within the network, but the radio access network (RAN) part (comprising radio network infrastructure equipment such as the base stations 11 of Figure 1 and / or the combined TRPs / CUs of Figure 2) is not. The core network is aware of the location of idle mode terminal devices at a paging tracking area level but not at the level of individual transceiver entities. The core network will generally assume a terminal device is located within the tracking area(s) associated with a transceiver entity most recently used for communicating with the terminal device, unless the terminal device has since provided a specific tracking area update (TAU) to the network. (As is conventional, idle mode terminal devices are typically required to send a TAU when they detect they have entered a different tracking area to allow the core network to keep track of their location.) Because the core network tracks terminal devices at a tracking area level, it is generally not possible for the network infrastructure to know which specific transceiver entities (radio network node) to use when seeking to initiate contact with a terminal device in idle mode. Consequently, and as is well known, when a core network is required to connect to an idle mode terminal device a paging procedure is used.

In a typical currently deployed network, idle mode terminal devices are configured to monitor for paging messages periodically. For terminal devices (in connected and idle mode) operating in a discontinuous reception (DRX) mode this occurs when they wake up for their DRX wake time. Paging signals for a specific terminal device are transmitted in defined frames (Paging Frames) / sub-frames (Paging Occasions) which for a given terminal device may be derived from the International Mobile Subscriber Identifier (IMSI) of the terminal device, as well as paging related DRX parameters established in system information transmitted within the network.

Power saving is an important aspect of NR, and there are a number of different ways in which the battery life of a UE may be improved. One such way is by enabling DRX configuration to adapt to the UE's traffic, for example, the use of a Wake Up Signal (WUS) to indicate whether a UE should wake up during a DRX ON period. The WUS is a signal that is transmitted to a UE or a group of UEs prior to a DRX ON period or Paging Occasion to indicate whether the UE(s) needs to wake up during this ON period and monitor for possible traffic, e.g. monitor the PDCCH (Physical Downlink Control Channel). This recognises that not every DRX ON period contains traffic for the UE, and for such a case, the PDCCH monitoring consumes unnecessary power from the UE, which can be avoided with this WUS signal. Copending European patent applications filed with application numbers EP17169577.8 [3], EP17186065.3 [4], EP17186062.0 [5], and EP17201751.9 [6] address the use of WUS signals.

If the WUS is misdetected (i.e. a WUS is transmitted but the UE fails to detect it), then the UE would miss the corresponding paging message, and so the reliability of the paging is reduced. To avoid misdetection, another Power Saving Signal is proposed, where this signal is always transmitted prior to a paging occasion (PO) and would indicate to the UE whether it should Go To Sleep (i.e. there is no need for the UE to monitor for PDCCH and PDSCH (Physical Downlink Shared Channel)) or Wake Up (i.e. monitor for PDCCH and PDSCH in the corresponding PO). This Go to sleep or wake Up Signal (GUS), which is known and proposed in [7], would therefore remove any misdetection since the UE would expect it to be there. The UE will miss a paging occasion if there is an incorrect detection at the UE; i.e. the UE mistakes a Wake Up for a Go To Sleep (GTS) indication. The drawback of using GUS is that it consumes a lot of resources, since it needs to be transmitted regardless of whether there is any potential paging message for the UE.

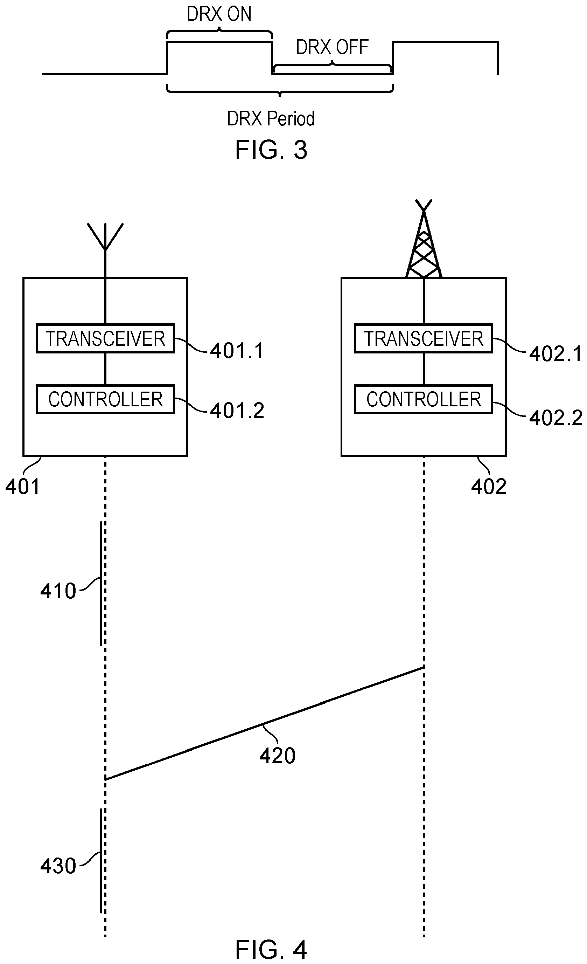

The basic DRX cycle is shown in Figure 3, which consists of an ON period and an OFF period where the ON period occurs periodically at a fixed DRX period. It should be appreciated by those skilled in the art that such a basic operation may not always be efficient, particularly if a UE frequently does not receive any signals during the ON period (or active operating mode) of the DRX operation. Embodiments of the present disclosure introduce a mechanism to both provide information on, and to control and dynamically change the DRX ON duration and other characteristics of the DRX cycle, thus improving power saving capabilities.

### Dynamic DRX On Duration

Figure 4 shows a part schematic, part message flow diagram representation of a wireless communications network comprising a communications device 401 and an infrastructure equipment 402 in accordance with embodiments of the present technique. The communications device 401 and the infrastructure equipment 402 each comprise a transceiver (or transceiver circuitry) 401.1, 402.1, and a controller (or controller circuitry) 401.2, 402.2. The transceiver circuitry 401.1 and 402.2 comprises both transmitter and receiver elements. Each of the controllers 401.2, 402.2 may be, for example, a microprocessor, a CPU, or a dedicated chipset, etc. The communications device 401 is configured to periodically switch, in accordance with a discontinuous reception, DRX, operation, between an active operating mode in which the receiver of the communications device 401 is fully powered to monitor for received signals, and a reduced power operating mode in which the receiver of the communications device 401 is not provided with power to monitor for received signals.

The transceiver circuitry 401.1 and the controller circuitry 401.2 of the communications device 401 are configured in combination to monitor 410 for signals transmitted by the infrastructure equipment 402 to the communications device 401 to receive 420, from the infrastructure equipment 402, a dynamic DRX indicator, DDI, the DDI indicating that the DRX operation (i.e. at least the current or a next instance of the active operating mode - DRX ON - of the DRX operation) should be updated by the communications device 401, and to update 430 the DRX operation in accordance with the received DDI. The DDI may be received by the communications device from the infrastructure equipment while the communications device is in the active operating mode, though this is not always the case. It should be appreciated by those skilled in the art that, having transmitted the DDI to the communications device indicating that the DRX operation should be updated by the communications device, the infrastructure may then be configured to transmit signals to the communications device in accordance with the updated DRX operation indicated by the transmitted DDI. Of course, it is possible that the infrastructure equipment, having transmitted the DDI to the communications device indicating that it should update its DRX operation, actually may not then transmit any signals to the communications device.

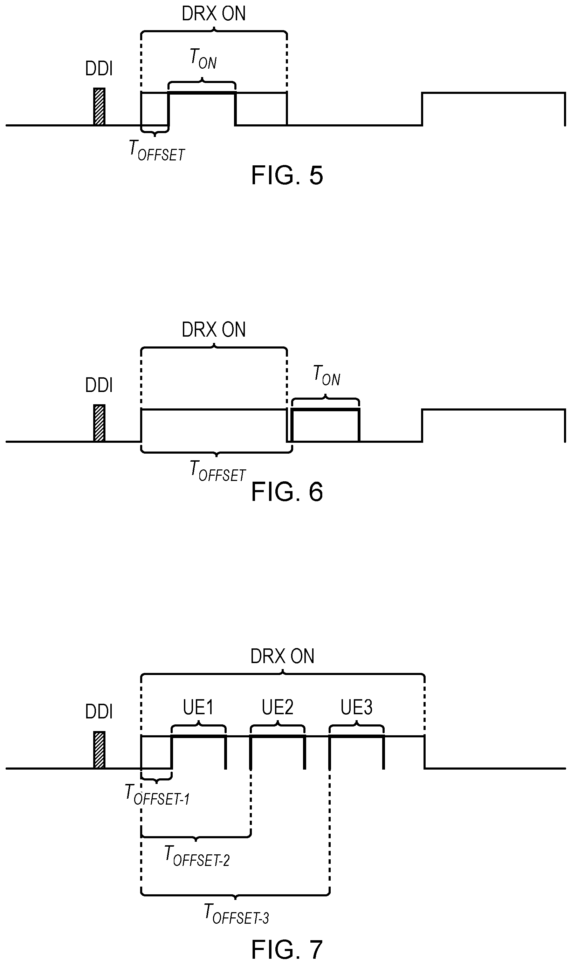

Essentially, embodiments of the present technique introduce a Dynamic DRX Indicator (DDI) that signals updates to the ON duration of a DRX cycle. In an arrangement of embodiments of the present technique, the DDI consists of a time offset *T_{OFFSET}* and a new DRX duration *T_{ON}* as shown in Figure 5. In other words, the DDI indicates that the communications device should change a length of time for which the communications device is in the active operating mode from a default active period to a new active period. The DDI indicates an offset period from a default time at which the communications device should switch into the active operating mode to a new time at which the communications device should switch into the active operating mode. In the example of Figure 5, a DDI is transmitted prior to the DRX ON duration of interest, which changes the DRX ON duration to *T_{ON}* with a delayed start of *T_{OFFSET}.*

In the example illustrated by Figure 5, *T_{ON}* is less than the original DRX ON duration and contained within the DRX ON duration, which would mitigate against the UE missing the DDI. However, it should be appreciated that this arrangement is not limited to just this case and that *T_{ON}* can be larger than DRX ON and *T_{OFFSET}* can be set such that the updated ON duration falls outside of the original DRX ON period as shown in Figure 6. This has the benefit that the network can delay its scheduling for a UE after the DRX ON period if say the DRX ON duration is congested. The UE therefore can go to sleep during the DRX ON period and wake up only after *T_{OFFSET}.*

It should be noted that different UEs sharing the same DRX ON duration can be configured to have different *T_{OFFSET}* and *T_{ON}* parameters. For example, the network can configure these parameters such that the *T_{ON}* for different UEs do not overlap each other as shown in an example in Figure 7 where here 3 UEs are indicated to update their DRX ON duration via the DDI (note there can be 3 DDIs or a single one addressing all 3 UEs) and each has a different *T_{OFFSET},* i.e. *T_{OFFSET-1}* for UE1, *T_{OFFSET-2}* for UE2 and *T_{OFFSET-3}* for UE3, where these offsets are configured such that the ON duration of these 3 UEs do not collide. In other words, the DDI indicates that the DRX operation should be updated by a plurality of communications devices including the communications device 401, each of the plurality of communications devices operating in accordance with the same DRX operation, wherein the DDI indicates that the DRX operation should be updated by the communications device differently to one or more of the others of the plurality of communications devices. Alternatively, not being according to the invention as claimed, the DDI is one of a plurality of DDIs each indicating that the DRX operation should be updated by one of a plurality of communications devices including the communications device 401, each of the plurality of communications devices operating in accordance with the same DRX operation, wherein the DDI indicates that the DRX operation should be updated by the communications device differently to one or more of the others of the plurality of communications devices.

In another arrangement of embodiments of the present technique, the parameters *T_{OFFSET}* and *T_{ON}* (i.e. the offset period and the new active period) are explicitly signalled in the DDI.

In another arrangement of embodiments of the present technique, the parameters *T_{OFFSET}* and *T_{ON}* are RRC configured and the indicator in the DDI consists of an activation signal, e.g. a bit to activate the update to the ON duration. In other words, one or both of the offset period and the new active period are configured via Radio Resource Control, RRC, signalling, and wherein the DDI comprises an activation signal indicating that one or both of the offset period and the new active period should be updated.

In another arrangement of embodiments of the present technique, the parameters *T_{OFFSET}* and *T_{ON}* are implicitly derived from the UE ID (e.g. C-RNTI). This allows the DDI to address a group of UEs and each UE would derive the *T_{OFFSET}* and *T_{ON}* based on its UE ID. In other words, the communications device is configured to implicitly determine, based on an identifier associated with the communications device, one or both of the offset period and the new active period.

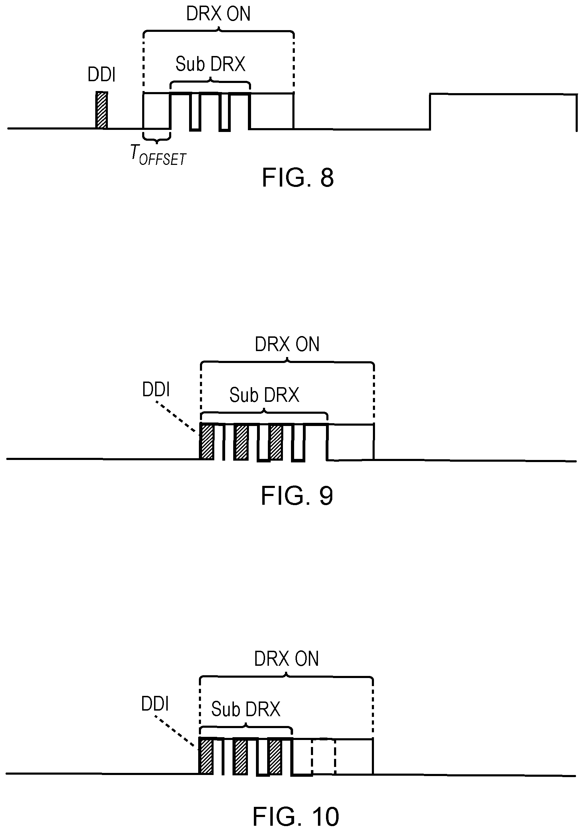

In another arrangement of embodiments of the present technique, the DDI indicates parameters for sub-DRX cycles. In other words, the DDI indicates that the communications device should operate in accordance with a sub-DRX cycle for a specified period of time, the sub-DRX cycle having a shorter period than the DRX operation and instances of an active operating mode of the sub-DRX cycle being shorter in time than instances of the active operating mode of the DRX operation. An example of this arrangement is shown in Figure 8, where the DDI indicates a set of sub-DRX cycles that starts after a delay of *T_{OFFSET}.* The sub-DRX cycle has a shorter DRX period than the original DRX cycle and a smaller DRX ON duration. In this example, the sub-DRX cycle is completely contained within the DRX ON duration (the aspect of being completely contained within the DRX ON duration is beneficial since it mitigates against the UE missing the indicator in the DDI). However, it should be appreciated that this arrangement does not exclude the case where the sub-DRX cycle extends outside of the DRX ON duration. It will be appreciated that the sub-DRX cycle functionality can be implemented as a pattern for reduced PDCCH monitoring. For example, if the sub-DRX cycle causes the UE to be "on" for 1 slot and "off" for 3 slots, this sub-DRX cycle can be implemented as a reduced PDCCH monitoring pattern where the UE monitors PDCCH in every 4^{th} slot.

In some sub-DRX related arrangements of embodiments of the present technique, the DDI acts as a "keep alive" indicator within the DRX ON period. If the DDI is active within a sub-DRX of the DRX ON period, it indicates that the subsequent sub-DRX of the DRX ON period is active. In other words, if the communications device detects the DDI during one of the instances of the active operating mode of the sub-DRX cycle, the communications device determines that there is another instance of the active operating mode of the sub-DRX cycle after the one of the instances of the active operating mode of the sub-DRX cycle. This is illustrated in Figure 9, where the first three sub-DRX of the DRX ON period contain active DDIs, indicating that the first four sub-DRX periods are active. The fourth sub-DRX period does not contain an active DDI, indicating that there are no further active sub-DRX periods within the DRX ON period. In other words, if the communications device does not detect the DDI during one of the instances of the active operating mode of the sub-DRX cycle, the communications device determines that it should switch into the reduced power operating mode, after the one of the instances of the active operating mode of the sub-DRX cycle, for the remainder of the sub-DRX cycle.

It will be appreciated that the "keep alive" functionality can also be implemented in a manner where the DDI indicates whether the current sub-DRX period is active or not and if a sub-DRX period is inactive, all further sub-DRX periods within the DRX ON period are understood to be inactive. In other words, if the communications device detects the DDI during one of the instances of the active operating mode of the sub-DRX cycle, the communications device determines that the communications device should search for a DDI during a next instance of the active operating mode of the sub-DRX cycle after the one of the instances of the active operating mode of the sub-DRX cycle. This is illustrated in Figure 10, which shows that there are DDIs for the first 3 sub-DRX periods: these DDI indicate that those sub-DRX periods are active and cause the UE to search for a DDI in the subsequent sub-DRX period. The fourth sub-DRX period does not contain a DDI: this means that the UE does not decode PDCCH within this sub DRX period and goes to sleep for the remainder of the DRX ON period. In other words, if the communications device does not detect the DDI during one of the instances of the active operating mode of the sub-DRX cycle, the communications device determines that it should immediately switch into the reduced power operating mode for the remainder of the sub-DRX cycle.

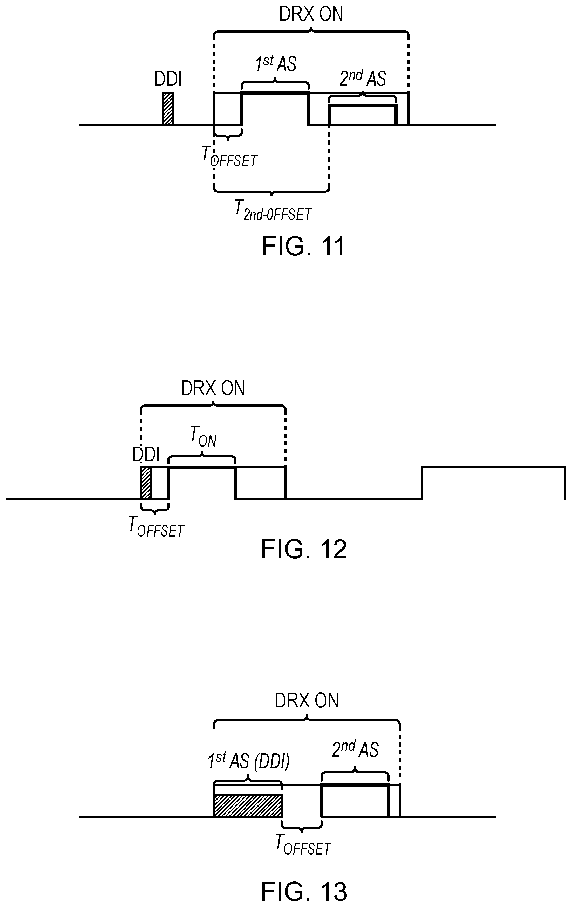

In another arrangement of embodiments of the present technique, the DDI indicates two Active States (ASs) during the DRX ON duration. In other words, the DDI indicates a plurality of active DRX states, a first of the active DRX states lasting for the new active period and being offset from the default time at which the communications device should switch into the active operating mode by the offset period, and a second of the active DRX states lasting for a second new active period and being offset from the default time at which the communications device should switch into the active operating mode by a second offset period. Similar to previous arrangements, the 1^{st} AS starts *T_{OFFSET}* from the beginning of the DRX ON duration and with a period of *T_{ON}* and the 2^{nd} AS starts *T_{2nd-OFFSET}* from the beginning of the DRX ON duration with a period of *T_{2nd-ON}.* An example is shown in Figure 11, where the 1^{st} AS starts after *T_{OFFSET}* and the 2^{nd} AS starts after *T_{2nd-OFFSET}* (i.e. the second offset period of the second active DRX state is longer than the offset period of the first active DRX state). The signalling overhead can be reduced, for example, with the DDI indicating the 1^{st} AS and the 2^{nd} AS following immediately after the 1^{st} AS for the remaining DRX ON duration. The 1^{st} Active State may be associated with a higher decoding complexity, requiring higher power consumption to decode, than the 2^{nd} Active State. The higher decoding complexity may be because there is a greater number of signals to be decoded during the first new active period than the second new active period (e.g. more PDCCHs in the search space) or that the decoding of the signals is harder for the UE in the first new active period (e.g. because the signals are transmitted with a higher number of transmit antennas or on a greater number of beams than those in the second new active period). In other words, the communications device is configured to receive a greater number of signals and/or signals having a higher decoding complexity during the new active period of the first active DRX state than during the second new active period of the second active DRX state. For example the 1^{st} AS is where the UE monitors a full set of PDCCH search spaces (as per legacy system) and in the second Active State the UE would:
1) Turn off, i.e. this is similar to the previous arrangement shown in Figure 5; or
2) Reduce the PDCCH monitoring, e.g. reduce the number of search spaces monitored per slot or reduce the number of blind decodes (i.e. PDCCH candidates) in each search space.

In either of the above cases, the reduced decoding complexity in the second active state results in a lower power consumption during the second active state.

In another arrangement of embodiments of the present technique, the DDI indicates whether the DRX ON period should be interpreted as operating in a power saving mode or in a legacy mode. In other words, the DDI indicates whether the communications device should operate in a first (power saving) mode in accordance with the plurality of active DRX states or whether the communications device should operate in a second (legacy) mode in accordance with the default DRX operation. For example, the presence of DDI in Figure 11 can indicate that the DRX ON period operates in a power saving mode with two active states or in a legacy mode (where the UE decodes PDCCH throughout the DRX ON period).

In another arrangement of embodiments of the present technique, the DDI is carried by a Wake Up Signal (WUS). As described in [3], [4], [5], [6], a WUS is a signal that is transmitted prior to a DRX ON duration (such as a Paging Occasion) to indicate that there is potential traffic for the UE in the corresponding DRX ON duration. An absence of the WUS indicates that there is no traffic in the corresponding DRX ON duration. In this arrangement, the DDI is carried by the WUS, e.g. as another field in the WUS. The DDI can be implicitly carried by the WUS, e.g. the presence of the WUS would indicate the DDI is activated.

In another arrangement of embodiments of the present technique, the DDI is a Go To Sleep (GTS) or Go To Sleep And Wake Up Signal (GUS). The GTS (or GUS) is similar to a WUS except that the presence of the GTS indicates that there is no traffic in the corresponding DRX ON duration whilst an absence of the GTS indicates that there is potential traffic in the corresponding DRX ON duration. The GUS explicitly indicates either "wake up" or "go to sleep" and is always present before the corresponding DRX ON duration. Hence, in the GUS case, in addition to indicating whether the DRX ON duration is activated or not, it also indicates its characteristics (e.g. as previously described). In the GTS-based arrangement, the DDI can be used to indicate a lower powered DRX ON duration or that the corresponding DRX ON duration is deactivated.

In another arrangement of embodiments of the present technique, the DDI is carried by a DCI. This can be a compact DCI, i.e. a DCI that is "light weight" and only contains the necessary information required by the DDI. The DDI can alternatively be transmitted as a bit field within a DCI that is used for other purposes (e.g. the DDI can be transmitted as a bit field within a DCI that schedules DL or UL resource). In this arrangement the DDI may be transmitted within the DRX ON duration as shown in Figure 12. In the example shown, the compact-DCI-coded DDI indicates that the UE should wake up for a duration of T_{ON} after a time T_{OFFSET}; outside of this time window, the UE can go to sleep. It should be noted that if the UE does not receive this DDI, the UE would remain awake. This has the benefit that if the network is heavily loaded, and hence cannot transmit additional compact DCIs (e.g. one carrying DCI), the UE is still able to monitor for received PDCCHs.

In another arrangement of embodiments of the present technique, the DDI is implicit. For example, if a DCI is received in a first portion of the DRX ON period, the UE receives the further second portion of the DRX ON period; if no DCI is received in a first portion of the DRX ON period, the UE can go to sleep for the further second portion of the DRX ON period. In other words, the communications device is configured to determine, based on at least one other received signal, that a DDI has been implicitly received. The at least one other received signal may be a DCI which is received by the communications device in a first portion of an instance of the active operating mode, the DCI indicating that the communications device should monitor a second portion of the instance of the active operating mode for a second DCI.

One action in accordance with (legacy) behaviour that a UE may take when it detects a PDCCH (DCI) is that it will start an Inactivity Timer and this Inactivity Timer can be longer than the DRX ON duration. In other words, in response to receiving the DCI comprising the DDI, the communications device is configured to start an inactivity timer specifying a period during which the communications device remains in the active operating mode. This behaviour can be used to prolong the DRX ON duration for example by transmitting a compact DCI containing DDI at the end of the DRX ON duration.

In an aspect of this arrangement related to the base station, when the DRX ON duration is congested (e.g. many UEs need to be scheduled within the DRX ON duration), at the start of the DRX ON duration, the base station sends compact DCIs to those UEs that will be scheduled towards the end of the DRX ON duration. Such UEs will thus start their inactivity timers such that they can be scheduled beyond the end of the DRX ON duration. In other words, wherein the infrastructure equipment is configured to transmit the DDI to the communications device during an instance of the active operating mode of the DRX operation of the communications device, at a time from which the period specified by the inactivity timer is longer than a period of time remaining of the instance of the active operating mode of the DRX operation of the communications device.

In an arrangement of embodiments of the present technique, there are two active states, as described above with relation to Figure 11, but where the first active state enables a *lower* power operation than the second active state (i.e. the opposite of the arrangement shown in Figure 11). In other words, the DDI indicates a plurality of active DRX states, a first of the active DRX states lasting for the new active period and being offset from the default time at which the communications device should switch into the active operating mode by the offset period, and a second of the active DRX states lasting for a second new active period and being offset from the default time at which the communications device should switch into the active operating mode by a second offset period, wherein the communications device is configured to receive a greater number of signals and/or signals having a higher decoding complexity (that typically require a higher power consumption to decode) during the second new active period of the second active DRX state than during the new active period of the first active DRX state. In the first AS, DCIs are transmitted that indicate which UEs are to be scheduled in the second AS. These DCIs can, for example, be transmitted in the form of compact DCIs. In the second AS, the UE decodes full search spaces that contain normal DCIs. In other words, the communications device is configured to receive a set of Downlink Control Indication, DCI, messages during the first active DRX state, the DCI messages indicating whether the communications device is to receive a downlink signal from the infrastructure equipment during the second active DRX state, or whether the communications device is to switch into the reduced power operating mode during the second active DRX state. This mode of operation allows the network to signal (in the first AS), which UEs need to monitor (using a higher power consumption) in the second AS. UEs that do not receive a compact DCI in the first AS can return to a low power after the conclusion of the first AS (and hence not decode the 2^{nd} AS or the remainder of the DRX ON period). The first AS hence acts as a DDI for the second AS. This arrangement is illustrated in Figure 13.

While described in the form of the first AS transmitting compact DCIs, it will be appreciated that normal DCIs (e.g. DCIs scheduling DL or UL data) can be transmitted in the first AS. If the UE receives an allocation via a normal DCI during the first AS, this is understood to be an implicit indication that the UE should monitor the second AS for further DCIs, as described above in relation to the arrangement of the implicit DDI.

In another arrangement of embodiments of the present technique, the DDI is UE specific. That is, a DDI is transmitted to a single UE and therefore can contain tailored parameters for that UE. A DCI-based DDI (e.g. a compact DCI) is particularly suited to this arrangement, since the DCI carries the UE identity (e.g. through masking the CRC of the DCI with the UE's C-RNTI). Alternatively, in another arrangement of embodiments of the present technique, the DDI is group specific. That is the DDI is transmitted to a known group of UEs. This can be carried by a Group Common DCI or a WUS/GTS that addresses a group of UEs. The grouping can be done via RRC configuration or based on UE ID.

In another arrangement of embodiments of the present technique the DDI affects more than one DRX ON duration. In previous arrangements, the DDI affects one corresponding (i.e. a DRX ON duration immediately after the DDI). Here this DDI can be configured to affect multiple DRX ON durations. For example the DDI can affect the next X DRX ON durations where X is indicated in the DDI, RRC configurable or determined in the specs. In other words, the DDI indicates that a specified number of next instances of the active operating mode of the DRX operation should be updated by the communications device.

### Flow Chart Representation

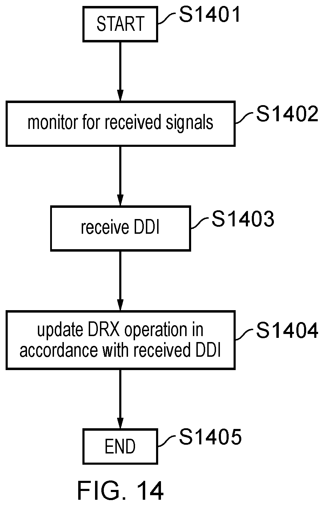

Figure 14 shows a flow diagram illustrating a method of operating a communications device according to embodiments of the present technique. The communications device is configured to receive signals from an infrastructure equipment of a wireless communications network, and the communications device is configured to periodically switch between an active operating mode and a reduced power operating mode in accordance with a discontinuous reception, DRX, operation.

The method begins in step S1401. The method comprises, in step S1402, monitoring for signals transmitted by the infrastructure equipment via a wireless access interface provided by the wireless communications network to the communications device. In step S1403, the process comprises receiving via the wireless access interface, from the infrastructure equipment, a dynamic DRX indicator, DDI, the DDI indicating that the DRX operation should be updated by the communications device. The method then advances to step S1404, which comprises updating the DRX operation in accordance with the received DDI. The process ends in step S1405.

Those skilled in the art would appreciate that the method shown by Figure 14 may be adapted in accordance with embodiments of the present technique. For example, other intermediate steps may be included in the method, or the steps may be performed in any logical order.

Those skilled in the art would further appreciate that such infrastructure equipment and/or communications devices as herein defined may be further defined in accordance with the various arrangements and embodiments discussed in the preceding paragraphs. It would be further appreciated by those skilled in the art that such infrastructure equipment and communications devices as herein defined and described may form part of communications systems other than those defined by the present disclosure.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors. Although the present disclosure has been described in connection with some embodiments, it is not intended to be limited to the specific form set forth herein. Additionally, although a feature may appear to be described in connection with particular embodiments, one skilled in the art would recognise that various features of the described embodiments may be combined in any manner suitable to implement the technique.

### References

[1] Holma H. and Toskala A, "LTE for UMTS OFDMA and SC-FDMA based radio access", John Wiley and Sons, 2009.
[2] RP-172834, "Revised WID on New Radio Access Technology," NTT DOCOMO, RAN#78.
[3] European Patent Applicant No. EP17169577.8.
[4] European Patent Applicant No. EP17186065.3.
[5] European Patent Applicant No. EP17186062.0.
[6] European Patent Applicant No. EP17201751.9.
[7] R1-1708311, "Idle Mode Power Efficiency Reduction," Sierra Wireless, RAN1#89.

## Claims

1. A communications device (401) configured to receive signals from an infrastructure equipment (402) of a wireless communications network, the communications device being configured to periodically switch between an active operating mode and a reduced power operating mode in accordance with a discontinuous reception, DRX, operation, the communications device comprising
transceiver circuitry (401.1) configured to transmit signals and receive signals via a wireless access interface provided by the wireless communications network, and
controller circuitry (401.2) configured to control the transceiver circuitry
to monitor (410) for signals transmitted by the infrastructure equipment to the communications device,
to receive (420), from the infrastructure equipment, a dynamic DRX indicator, DDI, the DDI indicating that the DRX operation should be updated by the communications device, and
to update (430) the DRX operation in accordance with the received DDI,
the communication device being **characterized by** the DDI indicating that the DRX operation should be updated by a plurality of communications devices including the communications device, each of the plurality of communications devices operating in accordance with the same DRX operation, wherein the DDI indicates that the DRX operation should be updated by the communications device differently to one or more of the others of the plurality of communications devices.

2. A communications device according to Claim 1, wherein the DDI is received by the communications device from the infrastructure equipment while the communications device is in the active operating mode.

3. A communications device according to Claim 1, wherein the DDI indicates that the communications device should change a length of time for which the communications device is in the active operating mode from a default active period to a new active period.

4. A communications device according to Claim 3, wherein the DDI indicates an offset period from a default time at which the communications device should switch into the active operating mode to a new time at which the communications device should switch into the active operating mode.

5. A communications device according to Claim 4, wherein one or both of the offset period and the new active period are explicitly signalled in the DDI.

6. A communications device according to Claim 4, wherein one or both of the offset period and the new active period are configured via Radio Resource Control, RRC, signalling, and wherein the DDI comprises an activation signal indicating that one or both of the offset period and the new active period should be updated.

7. A communications device according to Claim 4, wherein the communications device is configured to implicitly determine, based on an identifier associated with the communications device, one or both of the offset period and the new active period.

8. A communications device according to Claim 1, wherein the DDI indicates that the communications device should operate in accordance with a sub-DRX cycle for a specified period of time, the sub-DRX cycle having a shorter period than the DRX operation and instances of an active operating mode of the sub-DRX cycle being shorter in time than instances of the active operating mode of the DRX operation.

9. A method of operating a communications device (401) configured to receive signals from an infrastructure equipment (402) of a wireless communications network, the communications device being configured to periodically switch between an active operating mode and a reduced power operating mode in accordance with a discontinuous reception, DRX, operation, the method comprising
monitoring (410) for signals transmitted by the infrastructure equipment via a wireless access interface provided by the wireless communications network to the communications device,
receiving (420) via the wireless access interface, from the infrastructure equipment, a dynamic DRX indicator, DDI, the DDI indicating that the DRX operation should be updated by the communications device, and
updating (430) the DRX operation in accordance with the received DDI,
the method being **characterized by** the DDI indicating that the DRX operation should be updated by a plurality of communications devices including the communications device, each of the plurality of communications devices operating in accordance with the same DRX operation, wherein the DDI indicates that the DRX operation should be updated by the communications device differently to one or more of the others of the plurality of communications devices.

10. Circuitry for a communications device (401) configured to receive signals from an infrastructure equipment (402) of a wireless communications network, the communications device being configured to periodically switch between an active operating mode and a reduced power operating mode in accordance with a discontinuous reception, DRX, operation, the communications device comprising
transceiver circuitry (401.1) configured to transmit signals and receive signals via a wireless access interface provided by the wireless communications network, and
controller circuitry (401.2) configured to control the transceiver circuitry
to monitor (410) for signals transmitted by the infrastructure equipment to the communications device,
to receive (420), from the infrastructure equipment, a dynamic DRX indicator, DDI, the DDI indicating that the DRX operation should be updated by the communications device, and
to update (430) the DRX operation in accordance with the received DDI,
the circuitry being **characterized by** the DDI indicating that the DRX operation should be updated by a plurality of communications devices including the communications device, each of the plurality of communications devices operating in accordance with the same DRX operation, wherein the DDI indicates that the DRX operation should be updated by the communications device differently to one or more of the others of the plurality of communications devices.

11. An infrastructure equipment (402) forming part of a wireless communications network configured to transmit signals to a communications device (401), the communications device being configured to periodically switch between an active operating mode and a reduced power operating mode in accordance with a discontinuous reception, DRX, operation, the infrastructure equipment comprising
transceiver circuitry (402.1) configured to transmit signals and receive signals via a wireless access interface provided by the wireless communications network, and
controller circuitry (402.2) configured to control the transceiver circuitry
to transmit (420), to the communications device, a dynamic DRX indicator, DDI, the DDI indicating that the DRX operation should be updated by the communications device, and
to transmit signals to the communications device in accordance with the updated DRX operation indicated by the transmitted DDI,
the infrastructure equipment being **characterized by** the DDI indicating that the DRX operation should be updated by a plurality of communications devices including the communications device, each of the plurality of communications devices operating in accordance with the same DRX operation, wherein the DDI indicates that the DRX operation should be updated by the communications device differently to one or more of the others of the plurality of communications devices.

12. A method of operating an infrastructure equipment (402) forming part of a wireless communications network configured to transmit signals to a communications device (401), the communications device being configured to periodically switch between an active operating mode and a reduced power operating mode in accordance with a discontinuous reception, DRX, operation, the method comprising
transmitting (420) via a wireless access interface provided by the wireless communications network, to the communications device, a dynamic DRX indicator, DDI, the DDI indicating that the DRX operation should be updated by the communications device, and
transmitting signals via the wireless access interface to the communications device in accordance with the updated DRX operation indicated by the transmitted DDI,
the method being **characterized by** the DDI indicating that the DRX operation should be updated by a plurality of communications devices including the communications device, each of the plurality of communications devices operating in accordance with the same DRX operation, wherein the DDI indicates that the DRX operation should be updated by the communications device differently to one or more of the others of the plurality of communications devices.

13. Circuitry for an infrastructure equipment (402) forming part of a wireless communications network configured to transmit signals to a communications device (401), the communications device being configured to periodically switch between an active operating mode and a reduced power operating mode in accordance with a discontinuous reception, DRX, operation, the infrastructure equipment comprising
transceiver circuitry (402.1) configured to transmit signals and receive signals via a wireless access interface provided by the wireless communications network, and
controller circuitry (402.2) configured to control the transceiver circuitry
to transmit (420), to the communications device, a dynamic DRX indicator, DDI, the DDI indicating that the DRX operation should be updated by the communications device, and
to transmit signals to the communications device in accordance with the updated DRX operation indicated by the transmitted DDI,
the circuitry being **characterized by** the DDI indicating that the DRX operation should be updated by a plurality of communications devices including the communications device, each of the plurality of communications devices operating in accordance with the same DRX operation, wherein the DDI indicates that the DRX operation should be updated by the communications device differently to one or more of the others of the plurality of communications devices.

## Patentansprüche

1. Kommunikationsvorrichtung (401), die konfiguriert ist, um Signale von einer Infrastrukturausrüstung (402) eines drahtlosen Kommunikationsnetzes zu empfangen, wobei die Kommunikationsvorrichtung konfiguriert ist, um zwischen einem aktiven Betriebsmodus und einem Betriebsmodus mit reduzierter Leistung gemäß einem diskontinuierlichen Empfangsvorgang, DRX-Vorgang, periodisch umzuschalten, wobei die Kommunikationsvorrichtung umfasst:
eine Sendeempfängerschaltlogik (401.1), die konfiguriert ist, um Signale über eine drahtlose Zugangsschnittstelle, die durch das drahtlose Kommunikationsnetz bereitgestellt wird, zu übertragen und empfangen, und
eine Steuerschaltlogik (401.2), die konfiguriert ist, um die Sendeempfängerschaltlogik zu steuern,
um auf Signale zu überwachen (410), die durch die Infrastrukturausrüstung an die Kommunikationsvorrichtung übertragen werden,
um, von der Infrastrukturausrüstung, einen dynamischen DRX-Indikator, DDI, zu empfangen (420), wobei der DDI angibt, dass der DRX-Vorgang durch die Kommunikationsvorrichtung aktualisiert werden sollte, und
um den DRX-Vorgang gemäß dem empfangenen DDI zu aktualisieren (430),
wobei die Kommunikationsvorrichtung
**dadurch gekennzeichnet ist, dass** der DDI angibt, dass der DRX-Vorgang durch eine Vielzahl von Kommunikationsvorrichtungen, einschließlich der Kommunikationsvorrichtung, aktualisiert werden sollte, wobei jede der Vielzahl von Kommunikationsvorrichtungen gemäß demselben DRX-Vorgang arbeitet, wobei der DDI angibt, dass der DRX-Vorgang durch die Kommunikationsvorrichtung unterschiedlich zu einer oder mehreren der anderen der Vielzahl von Kommunikationsvorrichtungen aktualisiert werden sollte.

2. Kommunikationsvorrichtung nach Anspruch 1, wobei der DDI durch die Kommunikationsvorrichtung von der Infrastrukturausrüstung empfangen wird, während die Kommunikationsvorrichtung sich in dem aktiven Betriebsmodus befindet.

3. Kommunikationsvorrichtung nach Anspruch 1, wobei der DDI angibt, dass die Kommunikationsvorrichtung eine Zeitdauer, für die die Kommunikationsvorrichtung sich in dem aktiven Betriebsmodus befindet, von einer standardmäßigen aktiven Periode zu einer neuen aktiven Periode ändern sollte.

4. Kommunikationsvorrichtung nach Anspruch 3, wobei der DDI eine Verschiebungsperiode von einer Standardzeit, zu der die Kommunikationsvorrichtung in den aktiven Betriebsmodus umschalten sollte, zu einer neuen Zeit angibt, zu der die Kommunikationsvorrichtung in den aktiven Betriebsmodus umschalten sollte.

5. Kommunikationsvorrichtung nach Anspruch 4, wobei eine oder beide der Verschiebungsperiode und der neuen aktiven Periode in dem DDI explizit signalisiert werden.

6. Kommunikationsvorrichtung nach Anspruch 4, wobei eine oder beide der Verschiebungsperiode und der neuen aktiven Periode über eine Radio-Resource-Control-Signalisierung, RRC-Signalisierung, konfiguriert werden und wobei der DDI ein Aktivierungssignal umfasst, das angibt, dass eine oder beide der Verschiebungsperiode und/oder der neuen aktiven Periode aktualisiert werden sollten.

7. Kommunikationsvorrichtung nach Anspruch 4, wobei die Kommunikationsvorrichtung konfiguriert ist, um basierend auf einer der Kommunikationsvorrichtung zugeordneten Kennung eine oder beide der Verschiebungsperiode und der neuen aktiven Periode implizit zu bestimmen.

8. Kommunikationsvorrichtung nach Anspruch 1, wobei der DDI angibt, dass die Kommunikationsvorrichtung für einen angegebenen Zeitraum gemäß einem Unter-DRX-Zyklus arbeiten sollte, wobei der Unter-DRX-Zyklus eine kürzere Periode als der DRX-Vorgang aufweist und Instanzen eines aktiven Betriebsmodus des Unter-DRX-Zyklus zeitlich kürzer als Instanzen des aktiven Betriebsmodus des DRX-Vorgangs sind.

9. Verfahren zum Betreiben einer Kommunikationsvorrichtung (401), die konfiguriert ist, um Signale von einer Infrastrukturausrüstung (402) eines drahtlosen Kommunikationsnetzes zu empfangen, wobei die Kommunikationsvorrichtung konfiguriert ist, um zwischen einem aktiven Betriebsmodus und einem Betriebsmodus mit reduzierter Leistung gemäß einem diskontinuierlichen Empfangsvorgang, DRX-Vorgang, periodisch umzuschalten, wobei das Verfahren umfasst:
Überwachen (410) auf Signale, die durch die Infrastrukturausrüstung über eine drahtlose Zugangsschnittstelle übertragen werden, die durch das drahtlose Kommunikationsnetz an die Kommunikationsvorrichtung bereitgestellt wird,
Empfangen (420), über die drahtlose Zugangsschnittstelle, von der Infrastrukturausrüstung, eines dynamischen DRX-Indikators, DDI, wobei der DDI angibt, dass der DRX-Vorgang durch die Kommunikationsvorrichtung aktualisiert werden sollte, und
Aktualisieren (430) des DRX-Vorgangs gemäß dem empfangenen DDI,
wobei das Verfahren **dadurch gekennzeichnet ist, dass** der DDI angibt, dass der DRX-Vorgang durch eine Vielzahl von Kommunikationsvorrichtungen, einschließlich der Kommunikationsvorrichtung, aktualisiert werden sollte, wobei jede der Vielzahl von Kommunikationsvorrichtungen gemäß demselben DRX-Vorgang arbeitet, wobei der DDI angibt, dass der DRX-Vorgang durch die Kommunikationsvorrichtung unterschiedlich zu einer oder mehreren der anderen der Vielzahl von Kommunikationsvorrichtungen aktualisiert werden sollte.

10. Schaltlogik für eine Kommunikationsvorrichtung (401), die konfiguriert ist, um Signale von einer Infrastrukturausrüstung (402) eines drahtlosen Kommunikationsnetzes zu empfangen, wobei die Kommunikationsvorrichtung konfiguriert ist, um zwischen einem aktiven Betriebsmodus und einem Betriebsmodus mit reduzierter Leistung gemäß einem diskontinuierlichen Empfangsvorgang, DRX-Vorgang, periodisch umzuschalten, wobei die Kommunikationsvorrichtung umfasst:
eine Sendeempfängerschaltlogik (401.1), die konfiguriert ist, um Signale über eine drahtlose Zugangsschnittstelle, die durch das drahtlose Kommunikationsnetz bereitgestellt wird, zu übertragen und empfangen, und
eine Steuerschaltlogik (401.2), die konfiguriert ist, um die Sendeempfängerschaltlogik zu steuern,
um auf Signale zu überwachen (410), die durch die Infrastrukturausrüstung an die Kommunikationsvorrichtung übertragen werden,
um, von der Infrastrukturausrüstung, einen dynamischen DRX-Indikator, DDI, zu empfangen (420), wobei der DDI angibt, dass der DRX-Vorgang durch die Kommunikationsvorrichtung aktualisiert werden sollte, und
um den DRX-Vorgang gemäß dem empfangenen DDI zu aktualisieren (430),
wobei die Schaltlogik **dadurch gekennzeichnet ist, dass** der DDI angibt, dass der DRX-Vorgang durch eine Vielzahl von Kommunikationsvorrichtungen, einschließlich der Kommunikationsvorrichtung, aktualisiert werden sollte, wobei jede der Vielzahl von Kommunikationsvorrichtungen gemäß demselben DRX-Vorgang arbeitet, wobei der DDI angibt, dass der DRX-Vorgang durch die Kommunikationsvorrichtung unterschiedlich zu einer oder mehreren der anderen der Vielzahl von Kommunikationsvorrichtungen aktualisiert werden sollte.

11. Infrastrukturausrüstung (402), die Teil eines drahtlosen Kommunikationsnetzes ausbildet und konfiguriert ist, um Signale an eine Kommunikationsvorrichtung (401) zu übertragen, wobei die Kommunikationsvorrichtung konfiguriert ist, um zwischen einem aktiven Betriebsmodus und einem Betriebsmodus mit reduzierter Leistung gemäß einem diskontinuierlichen Empfangsvorgang, DRX-Vorgang, periodisch umzuschalten, wobei die Infrastrukturausrüstung umfasst:
eine Sendeempfängerschaltlogik (402.1), die konfiguriert ist, um Signale über eine drahtlose Zugangsschnittstelle, die durch das drahtlose Kommunikationsnetz bereitgestellt wird, zu übertragen und zu empfangen, und
Steuerschaltlogik (402.2), die konfiguriert ist, um die SendeempfängerSchaltlogik zu steuern,
um einen dynamischen DRX-Indikator, DDI, an die Kommunikationsvorrichtung zu übertragen (420), wobei der DDI angibt, dass der DRX-Vorgang durch die Kommunikationsvorrichtung aktualisiert werden sollte, und
um Signale an die Kommunikationsvorrichtung gemäß dem aktualisierten DRX-Vorgang zu übertragen, der durch den übertragenen DDI angegeben wird,
wobei die Infrastrukturausrüstung **dadurch gekennzeichnet ist, dass** der DDI angibt, dass der DRX-Vorgang durch eine Vielzahl von Kommunikationsvorrichtungen, einschließlich der Kommunikationsvorrichtung, aktualisiert werden sollte, wobei jede der Vielzahl von Kommunikationsvorrichtungen gemäß demselben DRX-Vorgang arbeitet, wobei der DDI angibt, dass der DRX-Vorgang durch die Kommunikationsvorrichtung unterschiedlich zu einer oder mehreren der anderen der Vielzahl von Kommunikationsvorrichtungen aktualisiert werden sollte.

12. Verfahren zum Betreiben einer Infrastrukturausrüstung (402), die Teil eines drahtlosen Kommunikationsnetzes ausbildet und konfiguriert ist, um Signale an eine Kommunikationsvorrichtung (401) zu übertragen, wobei die Kommunikationsvorrichtung konfiguriert ist, um zwischen einem aktiven Betriebsmodus und einem Betriebsmodus mit reduzierter Leistung gemäß einem diskontinuierlichen Empfangsvorgang, DRX-Vorgang, periodisch umzuschalten, wobei das Verfahren umfasst:
Übertragen (420) eines dynamischen DRX-Indikators, DDI, über eine drahtlose Zugangsschnittstelle, die durch das drahtlose Kommunikationsnetz bereitgestellt wird, an die Kommunikationsvorrichtung, wobei der DDI angibt, dass der DRX-Vorgang durch die Kommunikationsvorrichtung aktualisiert werden sollte, und
Übertragen von Signalen über die drahtlose Zugangsschnittstelle an die Kommunikationsvorrichtung gemäß dem aktualisierten DRX-Vorgang, der durch den übertragenen DDI angegeben wird,
wobei das Verfahren **dadurch gekennzeichnet ist, dass** der DDI angibt, dass der DRX-Vorgang durch eine Vielzahl von Kommunikationsvorrichtungen, einschließlich der Kommunikationsvorrichtung, aktualisiert werden sollte, wobei jede der Vielzahl von Kommunikationsvorrichtungen gemäß demselben DRX-Vorgang arbeitet, wobei der DDI angibt, dass der DRX-Vorgang durch die Kommunikationsvorrichtung unterschiedlich zu einer oder mehreren der anderen der Vielzahl von Kommunikationsvorrichtungen aktualisiert werden sollte.

13. Schaltlogik für eine Infrastrukturausrüstung (402), die Teil eines drahtlosen Kommunikationsnetzes ausbildet und konfiguriert ist, um Signale an eine Kommunikationsvorrichtung (401) zu übertragen, wobei die Kommunikationsvorrichtung konfiguriert ist, um zwischen einem aktiven Betriebsmodus und einem Betriebsmodus mit reduzierter Leistung gemäß einem diskontinuierlichen Empfangsvorgang, DRX-Vorgang, periodisch umzuschalten, wobei die Infrastrukturausrüstung umfasst:
eine Sendeempfängerschaltlogik (402.1), die konfiguriert ist, um Signale über eine drahtlose Zugangsschnittstelle, die durch das drahtlose Kommunikationsnetz bereitgestellt wird, zu übertragen und zu empfangen, und
Steuerschaltlogik (402.2), die konfiguriert ist, um die SendeempfängerSchaltlogik zu steuern,
um einen dynamischen DRX-Indikator, DDI, an die Kommunikationsvorrichtung zu übertragen (420), wobei der DDI angibt, dass der DRX-Vorgang durch die Kommunikationsvorrichtung aktualisiert werden sollte,
und
um Signale an die Kommunikationsvorrichtung gemäß dem aktualisierten DRX-Vorgang zu übertragen, der durch den übertragenen DDI angegeben wird,
wobei die Schaltlogik **dadurch gekennzeichnet ist, dass** der DDI angibt, dass der DRX-Vorgang durch eine Vielzahl von Kommunikationsvorrichtungen, einschließlich der Kommunikationsvorrichtung, aktualisiert werden sollte, wobei jede der Vielzahl von Kommunikationsvorrichtungen gemäß demselben DRX-Vorgang arbeitet, wobei der DDI angibt, dass der DRX-Vorgang durch die Kommunikationsvorrichtung unterschiedlich zu einer oder mehreren der anderen der Vielzahl von Kommunikationsvorrichtungen aktualisiert werden sollte.

## Revendications

1. Dispositif de communications (401) configuré pour recevoir des signaux en provenance d'un équipement d'infrastructure (402) d'un réseau de communications sans fil, le dispositif de communications étant configuré pour commuter périodiquement entre un mode de fonctionnement actif et un mode de fonctionnement à puissance réduite conformément à un fonctionnement en réception discontinue, DRX, le dispositif de communications comprenant
un système de circuit de transcepteur (401.1) configuré pour transmettre des signaux et recevoir des signaux par l'intermédiaire d'une interface d'accès sans fil fournie par le réseau de communications sans fil, et
un système de circuit de commande (401.2) configuré pour commander le système de circuit de transcepteur
pour surveiller (410) des signaux transmis par l'équipement d'infrastructure au dispositif de communications,
pour recevoir (420), en provenance de l'équipement d'infrastructure, un indicateur DRX dynamique, DDI, le DDI indiquant que le fonctionnement DRX doit être mis à jour par le dispositif de communications, et
pour mettre à jour (430) le fonctionnement DRX conformément au DDI reçu,
le dispositif de communication étant **caractérisé par** le DDI indiquant que le fonctionnement DRX doit être mis à jour par une pluralité de dispositifs de communications y compris le dispositif de communications, chacun parmi la pluralité de dispositifs de communications fonctionnant conformément au même fonctionnement DRX, dans lequel le DDI indique que le fonctionnement DRX doit être mis à jour par le dispositif de communications différemment d'un ou plusieurs des autres parmi la pluralité de dispositifs de communications.

2. Dispositif de communications selon la revendication 1, dans lequel le DDI est reçu par le dispositif de communications en provenance de l'équipement d'infrastructure alors que le dispositif de communications est dans le mode de fonctionnement actif.

3. Dispositif de communications selon la revendication 1, dans lequel le DDI indique que le dispositif de communications doit changer une durée pendant laquelle le dispositif de communications est dans le mode de fonctionnement actif d'un laps de temps actif par défaut à un nouveau laps de temps actif.

4. Dispositif de communications selon la revendication 3, dans lequel le DDI indique un laps de temps de décalage allant d'un moment par défaut auquel le dispositif de communications doit commuter dans le mode de fonctionnement actif à un nouveau moment auquel le dispositif de communications doit commuter dans le mode de fonctionnement actif.

5. Dispositif de communications selon la revendication 4, dans lequel l'un et/ou l'autre du laps de temps de décalage et du nouveau laps de temps actif sont explicitement signalés dans le DDI.

6. Dispositif de communications selon la revendication 4, dans lequel l'un et/ou l'autre du laps de temps de décalage et du nouveau laps de temps actif sont configurés par l'intermédiaire d'une signalisation de commande de ressource radio, RRC, et dans lequel le DDI comprend un signal d'activation indiquant que l'un et/ou l'autre du laps de temps de décalage et du nouveau laps de temps actif doivent être mis à jour.

7. Dispositif de communications selon la revendication 4, dans lequel le dispositif de communications est configuré pour déterminer implicitement, en fonction d'un identificateur associé au dispositif de communications, l'un et/ou l'autre du laps de temps de décalage et du nouveau laps de temps actif.

8. Dispositif de communications selon la revendication 1, dans lequel le DDI indique que le dispositif de communications doit fonctionner conformément à un sous-cycle DRX pendant un laps de temps spécifié, le sous-cycle DRX ayant un laps de temps plus court que le fonctionnement DRX et des instances d'un mode de fonctionnement actif du sous-cycle DRX étant plus courtes en temps que des instances du mode de fonctionnement actif du fonctionnement DRX.

9. Procédé de fonctionnement d'un dispositif de communications (401) configuré pour recevoir des signaux en provenance d'un équipement d'infrastructure (402) d'un réseau de communications sans fil, le dispositif de communications étant configuré pour commuter périodiquement entre un mode de fonctionnement actif et un mode de fonctionnement à puissance réduite conformément à un fonctionnement en réception discontinue, DRX, le procédé comprenant
la surveillance (410) de signaux transmis par l'équipement d'infrastructure par l'intermédiaire d'une interface d'accès sans fil fournie par le réseau de communications sans fil au dispositif de communications,
la réception (420) par l'intermédiaire de l'interface d'accès sans fil, en provenance de l'équipement d'infrastructure, d'un indicateur DRX dynamique, DDI, le DDI indiquant que le fonctionnement DRX doit être mis à jour par le dispositif de communications, et
la mise à jour (430) du fonctionnement DRX conformément au DDI reçu,
le procédé étant **caractérisé par** le DDI indiquant que le fonctionnement DRX doit être mis à jour par une pluralité de dispositifs de communications y compris le dispositif de communications, chacun parmi la pluralité de dispositifs de communications fonctionnant conformément au même fonctionnement DRX, dans lequel le DDI indique que le fonctionnement DRX doit être mis à jour par le dispositif de communications différemment d'un ou plusieurs des autres parmi la pluralité de dispositifs de communications.

10. Système de circuit destiné à un dispositif de communications (401) configuré pour recevoir des signaux en provenance d'un équipement d'infrastructure (402) d'un réseau de communications sans fil, le dispositif de communications étant configuré pour commuter périodiquement entre un mode de fonctionnement actif et un mode de fonctionnement à puissance réduite conformément à un fonctionnement en réception discontinue, DRX, le dispositif de communications comprenant
un système de circuit de transcepteur (401.1) configuré pour transmettre des signaux et recevoir des signaux par l'intermédiaire d'une interface d'accès sans fil fournie par le réseau de communications sans fil, et
un système de circuit de commande (401.2) configuré pour commander le système de circuit de transcepteur
pour surveiller (410) des signaux transmis par l'équipement d'infrastructure au dispositif de communications,
pour recevoir (420), en provenance de l'équipement d'infrastructure, un indicateur DRX dynamique, DDI, le DDI indiquant que le fonctionnement DRX doit être mis à jour par le dispositif de communications, et
pour mettre à jour (430) le fonctionnement DRX conformément au DDI reçu,
le système de circuit étant **caractérisé par** le DDI indiquant que le fonctionnement DRX doit être mis à jour par une pluralité de dispositifs de communications y compris le dispositif de communications, chacun parmi la pluralité de dispositifs de communications fonctionnant conformément au même fonctionnement DRX, dans lequel le DDI indique que le fonctionnement DRX doit être mis à jour par le dispositif de communications différemment d'un ou plusieurs des autres parmi la pluralité de dispositifs de communications.

11. Équipement d'infrastructure (402) faisant partie d'un réseau de communications sans fil configuré pour transmettre des signaux à un dispositif de communications (401), le dispositif de communications étant configuré pour commuter périodiquement entre un mode de fonctionnement actif et un mode de fonctionnement à puissance réduite conformément à un fonctionnement en réception discontinue, DRX, l'équipement d'infrastructure comprenant
un système de circuit de transcepteur (402.1) configuré pour transmettre des signaux et recevoir des signaux par l'intermédiaire d'une interface d'accès sans fil fournie par le réseau de communications sans fil, et
un système de circuit de commande (402.2) configuré pour commander le système de circuit de transcepteur
pour transmettre (420), au dispositif de communications, un indicateur DRX dynamique, DDI, le DDI indiquant que le fonctionnement DRX doit être mis à jour par le dispositif de communications, et
pour transmettre des signaux au dispositif de communications conformément au fonctionnement DRX mis à jour indiqué par le DDI transmis,
l'équipement d'infrastructure étant **caractérisé par** le DDI indiquant que le fonctionnement DRX doit être mis à jour par une pluralité de dispositifs de communications y compris le dispositif de communications, chacun parmi la pluralité de dispositifs de communications fonctionnant conformément au même fonctionnement DRX, dans lequel le DDI indique que le fonctionnement DRX doit être mis à jour par le dispositif de communications différemment d'un ou plusieurs des autres parmi la pluralité de dispositifs de communications.

12. Procédé de fonctionnement d'un équipement d'infrastructure (402) faisant partie d'un réseau de communications sans fil configuré pour transmettre des signaux à un dispositif de communications (401), le dispositif de communications étant configuré pour commuter périodiquement entre un mode de fonctionnement actif et un mode de fonctionnement à puissance réduite conformément à un fonctionnement en réception discontinue, DRX, le procédé comprenant
la transmission (420) par l'intermédiaire d'une interface d'accès sans fil fournie par le réseau de communications sans fil, au dispositif de communications, d'un indicateur DRX dynamique, DDI, le DDI indiquant que le fonctionnement DRX doit être mis à jour par le dispositif de communications, et
la transmission de signaux par l'intermédiaire de l'interface d'accès sans fil au dispositif de communications conformément au fonctionnement DRX mis à jour indiqué par le DDI transmis,
le procédé étant **caractérisé par** le DDI indiquant que le fonctionnement DRX doit être mis à jour par une pluralité de dispositifs de communications y compris le dispositif de communications, chacun parmi la pluralité de dispositifs de communications fonctionnant conformément au même fonctionnement DRX, dans lequel le DDI indique que le fonctionnement DRX doit être mis à jour par le dispositif de communications différemment d'un ou plusieurs des autres parmi la pluralité de dispositifs de communications.

13. Système de circuit destiné à un équipement d'infrastructure (402) faisant partie d'un réseau de communications sans fil configuré pour transmettre des signaux à un dispositif de communications (401), le dispositif de communications étant configuré pour commuter périodiquement entre un mode de fonctionnement actif et un mode de fonctionnement à puissance réduite conformément à un fonctionnement en réception discontinue, DRX, l'équipement d'infrastructure comprenant
un système de circuit de transcepteur (402.1) configuré pour transmettre des signaux et recevoir des signaux par l'intermédiaire d'une interface d'accès sans fil fournie par le réseau de communications sans fil, et
un système de circuit de commande (402.2) configuré pour commander le système de circuit de transcepteur
pour transmettre (420), au dispositif de communications, un indicateur DRX dynamique, DDI, le DDI indiquant que le fonctionnement DRX doit être mis à jour par le dispositif de communications, et
pour transmettre des signaux au dispositif de communications conformément au fonctionnement DRX mis à jour indiqué par le DDI transmis,
le système de circuit étant **caractérisé par** le DDI indiquant que le fonctionnement DRX doit être mis à jour par une pluralité de dispositifs de communications y compris le dispositif de communications, chacun parmi la pluralité de dispositifs de communications fonctionnant conformément au même fonctionnement DRX, dans lequel le DDI indique que le fonctionnement DRX doit être mis à jour par le dispositif de communications différemment d'un ou plusieurs des autres parmi la pluralité de dispositifs de communications.
